# EUROPEAN PATENT APPLICATION

(11) **EP 4 328 804 A1**
(43) Date of publication of application: **28.02.2024**
(21) Application number: 23183510.9
(22) Date of filing: 05.07.2023
(51) Int. Cl.: G06N 3/092, G06F 17/16, G06N 3/063

(54) **SYSTEMS AND METHODS FOR MATRIX OPERATION SELECTOR BASED ON MACHINE LEARNING**

(30) Priority: 19.08.2022 US 202263399637 P; 22.12.2022 US 202263434626 P; 03.02.2023 US 202318105723
(71) Applicant: Samsung Electronics Co., Ltd., Suwon-si, Gyeonggi-do 16677 (KR)
(72) Inventor: SUNG, Hsin-Hsuan, San Jose, CA 95134 (US); THORSLEY, David, San Jose, CA 95134 (US); HASSOUN, Joseph H., San Jose, CA 95134 (US)
(74) Representative: Kuhnen & Wacker Patent- und Rechtsanwaltsbüro PartG mbB

(57) **Abstract**

Systems and methods for matrix operation selector are disclosed. A selection engine receives a matrix as an input and extracts one or more features from the matrix. A machine learning model selects an action based on the one or more features. The action is for performing a matrix operation based on the matrix, and is predicted to satisfy a criterion with respect to a reward. The action is applied for the matrix operation, and a reward is computed based on the applying of the action. The machine learning model is retrained based on the reward.

## Description

### FIELD

One or more aspects of embodiments according to the present disclosure relate to matrix operations, and more particularly to a matrix operation selector based on machine learning.

### BACKGROUND

Matrix calculations are often required by computing applications such as machine learning, graph analytics, image processing, computer vision, and the like. As the computing applications become more and more complex and utilize larger sets of data, the running of the matrix calculations also become complex.

The above information disclosed in this Background section is only for enhancement of understanding of the background of the present disclosure, and therefore, it may contain information that does not form prior art.

### SUMMARY

Embodiments of the present disclosure are directed to a computer-implemented method. The method includes receiving a matrix as an input and extracting one or more features from the matrix. A machine learning model selects an action based on the one or more features. The action is for performing a matrix operation based on the matrix, and is predicted to satisfy a criterion with respect to a reward. The action is applied for the matrix operation, and a reward is computed based on the applying of the action. The machine learning model is retrained based on the reward.

In some embodiments, the matrix is a sparse matrix.

In some embodiments, the one or more features extracted from the matrix include at least one of a number (M) of rows, a number of columns (N), a number of non-zero (NNZ) values, a number of diagonals (Ndiags), a ratio of diagonals with non-zero values to total diagonals (NTdiags_ratio), an average number of non-zero values per row (aver_RD), a maximum number of non-zero values per row (max_RD), a minimum number of non-zero values per row (max_RD), a deviation of a number of non-zero values per row (dev_RD), a ratio of non-zero values in a diagonal data structure (ER_DIA), a ratio of non-zero values when entries of the matrix are stored in a dense array in column major order (ER_ELL), a ratio of non-zero values in a row-packed structure (ER_RD), an average different between NNZs of adjacent rows (row_bounce), average difference between NNZs of adjacent columns (col_bounce), density of NNZ in the sparse matrix (d), or average number of non-zero neighbors of an element (mean_neighbor).

In some embodiments, the action includes a compute kernel to be invoked for accelerating the matrix operation.

In some embodiments, the machine learning model is further trained to select a value of a hyperparameter for performing the matrix operation.

In some embodiments, the matrix operation includes a sparse matrix by dense matrix multiplication (SpMM).

In some embodiments, the matrix operation includes a general matrix multiply operation (GeMM).

In some embodiments, the machine learning model includes a deep reinforcement learning model.

In some embodiments, the reward includes speedup achieved in applying the action for the matrix operation.

In some embodiments, the reward is a negative reward in response to a dense matrix operation being faster than applying the action for the matrix operation.

In some embodiments, the criterion is maximization of the reward.

Embodiments of the present disclosure is also directed to a system that includes a processor and a memory. The memory stores instructions that, when executed by the processor, cause the processor to: receive a matrix as an input; extract one or more features from the matrix; select an action by a machine learning model based on the one or more features, wherein the action is for performing a matrix operation based on the matrix, wherein the action is predicted to satisfy a criterion with respect to a reward; apply the action for the matrix operation; compute the reward based on the applying of the action; and retrain the machine learning model based on the reward.

The method and the system of the invention have the technical effect to reduce a memory footprint and a computation consumption. As a result, with the method of the invention also the energy consumption of a computer implementing the method can be reduced, and a system requires less memory and a processor with less computing power than conventional systems.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a computing system for a matrix operation selector based on machine learning according to one or more embodiments;
FIG. 2 depicts an example sparse matrix according to one or more embodiments;
FIG. 3 depicts a block diagram of the processor according to one or more embodiments;
FIG. 4 depicts a block diagram of the selector engine according to one or more embodiments;
FIG. 5 depicts a flow diagram of a process for a matrix operation selector based on machine learning according to one or more embodiments; and
FIG. 6 depicts a flow diagram of a process for retraining an agent according to one or more embodiments.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

Rapid development of computing applications such as machine learning, computer vision, and natural language processing may come at the expense of heavy memory footprint and computation consumption due to the large amounts of data generated and used by the computing applications. Many times, the data generated and used by the applications is sparse data. For example, in the context of machine learning, one or more layers of a deep neural network may exhibit sparsity in data, such as sparse activation and weight values.

Sparse data may be represented by a sparse matrix, sparse tensor, and/or the like (collectively referenced as a sparse matrix). A sparse matrix typically contains more zero values that non-zero values. Matrix operations such as sparse matrix by dense matrix multiplication (SpMM), sampled dense-dense matrix multiplication (SDDMM), matricized tensor times Khatri-Rao product (MTTKRP), general matrix multiply (GeMM), and/or the like, may be performed using the sparse data.

Storing the sparse data and performing computations using the sparse data in the same manner as dense matrices may be computationally expensive. For example, if a sparse matrix is to be stored as a dense matrix, memory may need to be allocated for each zero value in the matrix. Storing a zero value that does not contain any information, however, may be a waste of memory. Furthermore, matrix computations such as addition or multiplication of rows and columns of a sparse matrix that contains mostly zero values may unnecessarily increase computation time.

Efforts have been made to store and process sparse matrices in a more efficient manner. For example, sparse matrices may be stored in a compressed manner to reduce memory footprint. In this regard, a compressed sparse row (CSR) format may store a sparse matrix as arrays of columns, along with the value at each row. A compressed sparse column (CSC) format may store a sparse matrix as arrays for rows, along with the values at each column. A compression and/or encoding mechanism such as vector sparse encoding may also be used, as discussed in Chen, Z. et al. 2021, "Efficient tensor core-based GPU kernels for structured sparsity under reduced precision," Proceedings of the International Conference for High Performance Computing, Networking, Storage and Analysis*,* the content of which is incorporated herein by reference. Another compression format for sparse data is disclosed in Zhou, Weijie, et al. 2019, "Enabling runtime SpMV format selection through an overhead conscious method," IEEE Transactions on Parallel and Distributed Systems 31.1: 80-93, the content of which is incorporated herein by reference.

High-performance compute kernels, libraries, and/or application programming interfaces (APIs) (collectively referenced as compute kernels) may also be used for accelerating computations involving sparse data. For example, optimized SpMM operations may be performed via the Sputnik kernel as described in Gale, Trevor, et al. 2020, "Sparse GPU kernels for deep learning," SC20: International Conference for High Performance Computing, Networking, Storage and Analysis, IEEE, the content of which is incorporated herein by reference. Other kernels for optimizing sparse matrix computations may include warp matrix multip-accumulate (WMMA), Cuda, cuSPARSE, and/or the like.

A drawback to existing optimization techniques including sparse compression techniques and/or kernels, and/or settings (e.g., hyperparameters) of the optimization techniques to be used, may vary depending on the sparse matrix that is processed, the environment in which a sparse computation is executed, the hardware architecture involved, and/or the like. For example, the optimization technique and/or parameters of the technique (collectively referenced as "the optimization technique,") for a sparse matrix with 90% of the values being zero may be different from the optimization technique for a sparse matrix with 55% of the values being zero. Generally, the selection of the optimization technique to be employed is manually determined based on one or more factors considered by a human administrator.

In general terms, embodiments of the present disclosure are directed to systems and methods for dynamically selecting an optimization technique based on attributes of an input. A selector system receives the input (e.g., a sparse matrix), and identifies a matrix or tensor operation to be performed (e.g., SpMM, GeMM, and/or the like). Although the various embodiments are described in terms of a sparse matrix and sparse matrix operations, a person of skill in the art should recognize that the various embodiments may be extended to other types of matrices, vectors, tensors, and/or the like.

In some embodiments, the selector system extracts attributes or features from the input and normalizes the attributes. The normalized attributes may be provided to a machine learning model, also referred to as an agent. The machine learning model may be, for example, a Deep Q-Network (DQN) or any other deep reinforcement learning model. The agent may employ a learned policy to select an action and associated settings from available actions and settings, to maximize a reward. The action may be a particular optimization technique to be applied in performing the matrix operation. The reward may be a speedup achieved in applying the action for the matrix operation. The agent may be periodically retrained to improve the policy to maximize the rewards associated with the actions. Embodiments of the present invention thus allow the selection of optimal settings for a matrix operation based on the attributes of the input, and need not be confined to a pre-selected, static action that may not be optimal for all inputs.

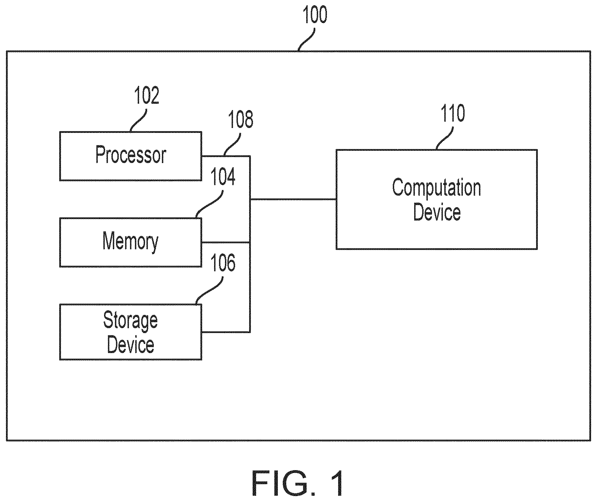

FIG. 1 depicts a computing system 100 for a matrix operation selector based on machine learning according to one or more embodiments. The computing system may take the form of a personal computer, server, tablet, smart phone, gaming device, and/or other network, personal, or mobile computing device. The computing system 100 may include a processor 102, memory 104, and storage device 106. The system 100 may also include a system bus 108 that may couple various components of the system (e.g., the processor 102, memory 104, and storage device 106) to one another.

The processor 102 may include one or more processors or processing cores configured to execute instructions stored in the memory 104. The memory 104 may be any volatile, non-volatile, dynamic, or static memory such as, for example, a read only memory (ROM), random access memory (RAM), flash memory, cache memory, register memory, and/or the like. In some embodiments, the instructions stored in the memory 104 allow the processor to provide one or more of the functionalities described herein, including the selection of an optimization technique for matrix computations based on attributes of an input. In some embodiments, the instructions stored in the memory are also part of a software program that requires matrix operations as part of its execution. The software program may be, for example, a machine learning program, graph analytics program, image processing program, computer vision program, and/or the like, used in applications such as self-driving cars, search engines, speech recognition, and/or the like.

During execution of the software program, various matrices may be generated, and matrix operations may need to be performed for the various matrices. The matrices may be sparse matrices. In some embodiments, the sparse matrices are stored in the storage device 106 in a dense format (e.g. including zero and non-zero elements). In some embodiments, the sparse matrices are stored in the storage device 106 in a condensed format. The condensed format may include, for example, CSR, CSC, or the like. The storage device 106 may take the form of any volatile or non-volatile storage device such as, for example, a hard disk, soldi-state drive (SSD), flash memory, ROM, RAM, and/or the like.

The matrix operations required by the software program may be, for example, matrix multiplications. In some embodiments, the processor 102 may include a machine learning model that analyzes a matrix that is subject of a matrix operation, and selects an optimization technique for performing the matrix operation. For example, the machine learning model may select a compute kernel and associated optimization parameters (e.g., hyperparameters) based on features of the matrix.

In some embodiments, the matrix operation using the selected optimization technique is performed by a computation device 110. The computation device 110 may be configured, for example, via dedicated hardware, to perform the matrix operation in a fast and efficient manner. For example, the computation device 110 may take different portions of the matrix and perform the matrix operation on the different portions in parallel. In some embodiments, the computation device 110 takes the form of a field programmable gate array (FPGA), complex programmable logic device (CPLD), application specific integrated circuit (ASIC), and/or the like.

The computation device 110 may output the results of the computation back to the software program. The results of the computation may be used, for example, by the software program to take an action. For a self-driving car, for example, the action may be to control the direction of the car. Results of the computations may also be stored back into the storage device 106.

In some embodiments, a reward that is achieved by performing the computation using the selected optimization technique is computed for reinforcement learning. In this regard, the machine learning model may be updated (e.g., periodically), based on the reinforcement learning, for improving the selection of the optimization technique based on the input matrix.

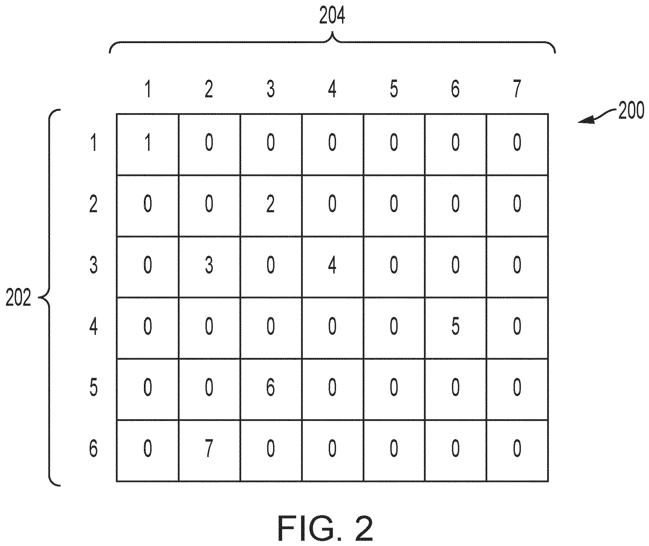

FIG. 2 depicts an example sparse matrix 200 according to one or more embodiments. The sparse matrix 200 is shown in a dense representation where both zero and non-zero elements are depicted. The sparse matrix 200 has m (e.g., 6) rows 202 indicated by row indices, and n columns 204 (e.g., 7), indicated by column indices.

In some embodiments, the sparse matrix 200 is stored in the storage device 106 in a compressed representation form. For example, the sparse matrix 200 may be stored in the CSR format in a row form using three one-dimensional arrays: V, COL_INDEX, and ROW_INDEX. The arrays V and COL_INDEX may have a length equal to a number of non-zero entries (NNZ) in the matrix, and may contain the non-zero values and the column indices of those values respectively. The array ROW_INDEX may be of length m + 1, and may encode the index in V and COL_INDEX where the given row starts.

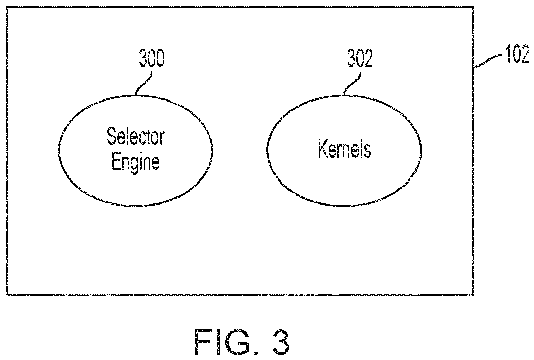

FIG. 3 depicts a block diagram of the processor 102 according to one or more embodiments. The processor 102 includes a selector engine 300 and a set of compute kernels 302. The selector engine 300 may include a machine learning model also referred to as an agent. The machine learning model may be, for example, a Deep Q-Network (DQN) or any other deep reinforcement learning model.

In some embodiments, the selector engine 300 is configured to extract features of an input matrix, and normalize the attributes. The normalized attributes may be provided to the agent. The agent may identify the particular matrix operation that is to be performed using the input matrix, and employ a learned policy to select an action from available actions to maximize a reward in performing the identified matrix operation. The action may define the optimization technique that is to be used to perform the matrix operation, including a particular compute kernel to employ, values of one or more hyperparameters, and/or the like. The reward may be a speedup achieved in applying the action for the matrix operation.

In some embodiments, the selector engine 300 is configured to select a compute kernel from the set of computing kernels 302. The set of compute kernels 302 may include high-performance compute kernels, libraries, and/or APIs, for efficiently handling sparse matrices. Exemplary compute kernels include, without limitation, WMMA, Cuda, cuSPARSE, Sputnik, and/or the like.

In some embodiments, the selector engine 300 is further configured to select values of one or more hyperparameters including a tile size (V) and precision (P). The tile size may indicate a size into which the input matrix is to be broken into. For example, the tile size may be set to be 2, 4, or 8, for breaking the input matrix into tiles (or sub-matrices) of 2, 4, or 8, respectively. Each tile or sub-matrix may be sent to a different processor of the computing device 110 for computation (e.g., in parallel). For example, the policy may select, based on the extracted features, an optimal tile size to be 2, 4, or 8.

The precision (P) hyperparameter indicates the precision of the floating-point computer number format for storing floating-point values of the matrix computations. The precision may be set to be any "half" (16 bits), "single," (32 bits), or "double" (64 bits). In some embodiments, any bit length greater than 0 may be set for the precision hyperparameter.

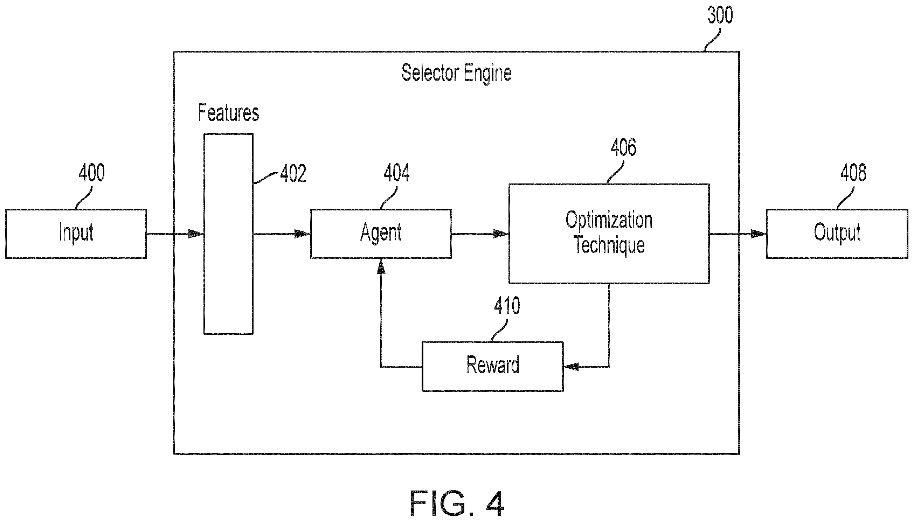

FIG. 4 depicts a block diagram of the selector engine 300 according to one or more embodiments. The selector engine 300 receives, as input 400, a matrix generated by a software application. The matrix may be, for example, a sparse matrix stored in the storage device 106 in a compressed format. For example, the matrix may be stored in the CSR format.

The selector engine 300 is configured to extract features 402 based on the input 400. The extracted features 402 may be configured to capture one or more characteristics of the matrix that may affect, for example, the efficiency of computation of the matrix. In one embodiment, 16 attributes of the matrix are extracted as the features 402. The extracted features 402 may include at least one of a number (M) of rows, a number of columns (N), a number of non-zero (NNZ) values, a number of diagonals (Ndiags), a ratio of diagonals with non-zero values to total diagonals (NTdiags_ratio), an average number of non-zero values per row (aver_RD), a maximum number of non-zero values per row (max_RD), a minimum number of non-zero values per row (max_RD), a deviation of a number of non-zero values per row (dev_RD), a ratio of non-zero values in a diagonal data structure (ER_DIA), a ratio of non-zero value in an ELLPACK data structure (that stores the entries of the matrix in a dense array in column major order) (ER_ELL), a ratio of non-zero values in a row-packed structure (ER_RD), an average different between NNZs of adjacent rows (row_bounce), average difference between NNZs of adjacent columns (col_bounce), density of NNZ in the sparse matrix (d), and/or average number of non-zero neighbors of an element (mean_neighbor).

The extracted features 402 may be normalized and provided to the agent 404 for selecting an optimization technique 406 based on a learned policy. In this regard, the agent 404 predicts a reward to be achieved for each available optimization technique. For example, the agent 404 may predict a reward for an optimization technique that includes the Sputnik action kernel, V = 2, and P = half. The agent 404 may also predict a reward for an optimization technique that includes the Sputnik action kernel, V = 4, and P = half. The reward prediction may occur for other combinations of available optimization features. The predicted reward may be, for example, predicted speedup achieved by the selected optimization technique. The agent 404 may then select the combination that satisfies a criterion with respect to the reward. The criterion may be, for example, maximization of the reward.

The selector engine 300 may output the selected optimization technique as an output 408. In some embodiments, a signal corresponding to the output 408 is provided to the computation device 110 for performing the matrix computation using the selected optimization technique.

In some embodiments, the selector engine 300 is configured to select (e.g., randomly) one or more matrix computations performed using a corresponding optimization technique 406, and compute a corresponding target reward. In this regard, the selector engine 300 may compare an amount of time taken to perform the matrix computation using the selected optimization technique 406, against an amount of time taken to perform the matrix operation using a dense representation of the matrix without applying the optimization technique. The amount of the target reward 410 may be equal to the amount of the speedup that is achieved in performing the matrix computation using the selected optimization technique, although embodiments are not limited thereto. Other types of rewards may include power efficiency, improved latency, reduced number of operations, and/or the like.

In some situations, the amount of time taken to perform the matrix computation using the selected optimization technique 406 may be longer than the time taken to perform the matrix computation using the dense representation of the matrix without the optimization technique. In this case, a negative target reward (e.g., -100) may be awarded for the selected optimization technique.

In some embodiments, the selection engine 300 is configured to retrain the agent 404 based on a computed loss. In some embodiments, the computed loss is a squared difference between the target reward and the predicted reward for a corresponding optimization technique. The retraining of the agent 404 may include performing a gradient descent with respect to one or more parameters of the agent to minimize the loss.

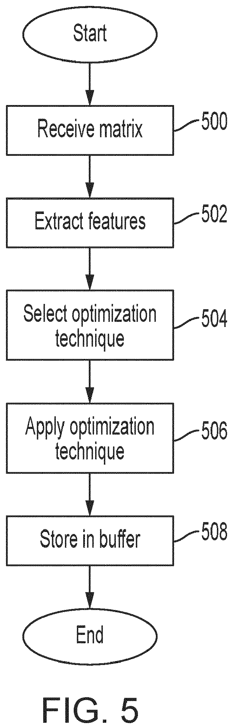

FIG. 5 depicts a flow diagram of a process for a matrix operation selector based on machine learning according to one or more embodiments. The process starts, and in act 500, a matrix is received as an input (e.g., by the selector engine 300). The matrix may be, for example, a sparse matrix generated by a software application running on the processor 102. The software application may transmit a command to the selector engine 300 to perform a matrix operation such as SpMM, SDDMM, MTTKRP, GeMM, or the like, using the generated sparse matrix.

In act 502, the input matrix is processed for extracting one or more features of the matrix, such as, for example, a number of rows in the matrix, a number of columns in the matrix, the number of nonzero elements, and/or the like. In some embodiments, the extracted features are configured to capture one or more characteristics of the matrix that may affect the performance of matrix computations.

In some embodiments, the extracted features are normalized to allow the features to have equal weights. For example, the value of the extracted features may be divided by the maximum corresponding value in the dataset.

In act 504, an optimization technique is selected for performing the matrix operation requested by the software application. In this regard, the selection engine 300 may select an optimization technique from available optimization techniques to maximize a predicted reward. The selected optimization technique may include a particular compute kernel and one or more hyperparameter settings.

In act 506, the selected optimization technique is provided for execution by, for example, the computation device 110. In this regard, the matrix operation requested by the software program may be executed by the computation device 10 using the optimization technique selected by the selector engine 300. The computation device 10 may output the results of the computation to the software program. The software program may in turn command an action based on the results of the computation. The results may also be stored in the storage device 106.

In act 508, the input matrix, selected optimization technique, and predicted reward may be stored in, for example, a buffer, for later retrieval for retraining the agent 404.

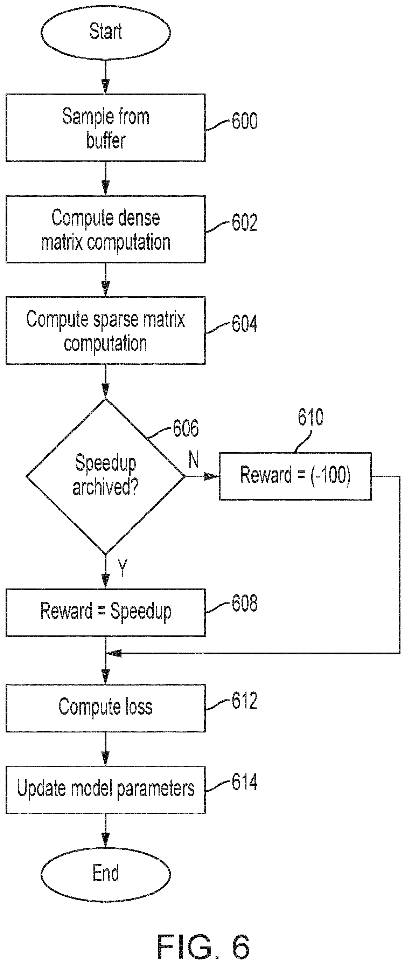

FIG. 6 depicts a flow diagram of a process for retraining the agent 404 according to one or more embodiments. The process starts, and in act 600, one or more input matrices and associated optimization techniques are sampled from the buffer.

In act 602, a matrix computation is performed using a dense representation of the matrix without applying an optimization technique. An amount of time taken to perform the dense matrix computation is determined.

In act 604, a sparse matrix computation is performed using the corresponding optimization technique. An amount of time taken to perform the sparse matrix computation is determined.

In act 606, a determination is made as to whether speedup is achieved by the sparse matrix computation.

If the answer is YES, a target reward for the corresponding optimization technique is set, in act 608, to be equal to the amount of the speedup.

If the answer is NO, the target reward for the corresponding optimization technique is set, in act 610, to be a particular negative value (e.g., -100).

In act 612 a loss is calculated based on the target reward and the predicted reward for the corresponding optimization technique. The loss may be, for example, a squared difference between the target reward and the predicted reward.

In act 614, one or more parameters of the machine learning model corresponding to the agent 404 may be updated based on the computed loss. In this regard, a gradient descent may be performed with respect to the one or more parameters in order to minimize the loss.

It should be appreciated that the sequence of steps of the processes depicted in the flow diagrams above are not fixed, but can be modified, changed in order, performed differently, performed sequentially, concurrently, or simultaneously, or altered into any desired sequence, as recognized by a person of skill in the art.

One or more embodiments of the present disclosure may be implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for matrix operation selector have been specifically described and illustrated herein, many modifications and variations will be apparent to those skilled in the art. Accordingly, it is to be understood that systems and methods for matrix operation selector constructed according to principles of this disclosure may be embodied other than as specifically described herein. The disclosure is also defined in the following claims, and equivalents thereof.

## Claims

1. A computer-implemented method comprising:
receiving a matrix as an input;
extracting one or more features from the matrix;
selecting an action by a machine learning model based on the one or more features,
wherein the action is for performing a matrix operation based on the matrix, wherein the action is predicted to satisfy a criterion with respect to a reward;
applying the action for the matrix operation;
computing the reward based on the applying of the action; and
retraining the machine learning model based on the reward.

2. The method of claim 1, wherein the matrix is a sparse matrix.

3. The method of claim 1 or 2, wherein the one or more features extracted from the matrix include at least one of a number of rows, M, a number of columns, N, a number of non-zero, NNZ, values, a number of diagonals, Ndiags, a ratio of diagonals with non-zero values to total diagonals, NTdiags_ratio, an average number of non-zero values per row, aver_RD, a maximum number of non-zero values per row, max_RD, a minimum number of non-zero values per row, max_RD, a deviation of a number of non-zero values per row, dev_RD, a ratio of non-zero values in a diagonal data structure, ER_DIA, a ratio of non-zero values when entries of the matrix are stored in a dense array in column major order, ER_ELL, a ratio of non-zero values in a row-packed structure, ER_RD, an average different between NNZs of adjacent rows, row_bounce, average difference between NNZs of adjacent columnscol_bounce, density of NNZ in the sparse matrix, d, or average number of non-zero neighbors of an element, mean_neighbor.

4. The method of any one of claims 1 to 3, wherein the action includes a compute kernel to be invoked for accelerating the matrix operation.

5. The method of any one of claims 1 to 4, wherein the machine learning model is further trained to select a value of a hyperparameter for performing the matrix operation.

6. The method of any one of claims 1 to 5, wherein the matrix operation includes a sparse matrix by dense matrix multiplication, SpMM.

7. The method of any one of claims 1 to 6, wherein the matrix operation includes a general matrix multiply operation, GeMM.

8. The method of any one of claims 1 to 7, wherein the machine learning model includes a deep reinforcement learning model.

9. The method of any one of claim 1 to 8, wherein the reward includes speedup achieved in applying the action for the matrix operation.

10. The method of any one of claims 1 to 8, wherein the reward is a negative reward in response to a dense matrix operation being faster than applying the action for the matrix operation.

11. The method of any one of claims 1 to 10, wherein the criterion is maximization of the reward.

12. A system comprising:
a processor; and
a memory, wherein the memory stores instructions that, when executed by the processor, cause the processor to perform the method according to any one of claims 1 to 11.
